Europäisches Patentamt

European Patent Office

Office européen des brevets

(19)

(11) Numéro de publication: **0 151 057**
**B1**

(12) **FASCICULE DE BREVET EUROPEEN**

(45) Date de publication du fascicule du brevet: **26.10.88**

(51) Int. Cl.⁴: **G 01 P 3/36, G 01 B 9/02**

(21) Numéro de dépôt: **85400066.8**

(22) Date de dépôt: **15.01.85**

(54) Interféromètre de vitesse à sensibilité continu7ment variable.

(30) Priorité: **20.01.84 FR 8400879**

(43) Date de publication de la demande:
**07.08.85 Bulletin 85/32**

(45) Mention de la délivrance du brevet:
**26.10.88 Bulletin 88/43**

(84) Etats contractants désignés:
**DE GB NL**

(56) Documents cités:
**DE-A-2 540 984**
**DE-A-2 818 166**

(73) Titulaire: **COMMISSARIAT A L'ENERGIE ATOMIQUE**
**31/33, rue de la Fédération**
**F-75015 Paris (FR)**

(72) Inventeur: **Bailly-Salins, René**
**17 C, rue des Buttes**
**F-21100 Dijon (FR)**

(74) Mandataire: **Mongrédien, André et al**
**c/o BREVATOME 25, rue de Ponthieu**
**F-75008 Paris (FR)**

Courier Press, Leamington Spa, England.

EP 0 151 057 B1

## Description

La présente invention concerne un interféromètre de vitesse à sensibilité continûment variable. Elle s'applique à l'étude, sans contact mécanique, du mouvement d'une surface optiquement réflectrice, ou d'une surface rugueuse capable de rétrodiffuser un faisceau lumineux incident. Elle permet d'effectuer des mesures même lorsque l'état de la surface étudiée évolue sous une action mécanique (contrainte, choc) ou chimique (changement de phase, oxydation).

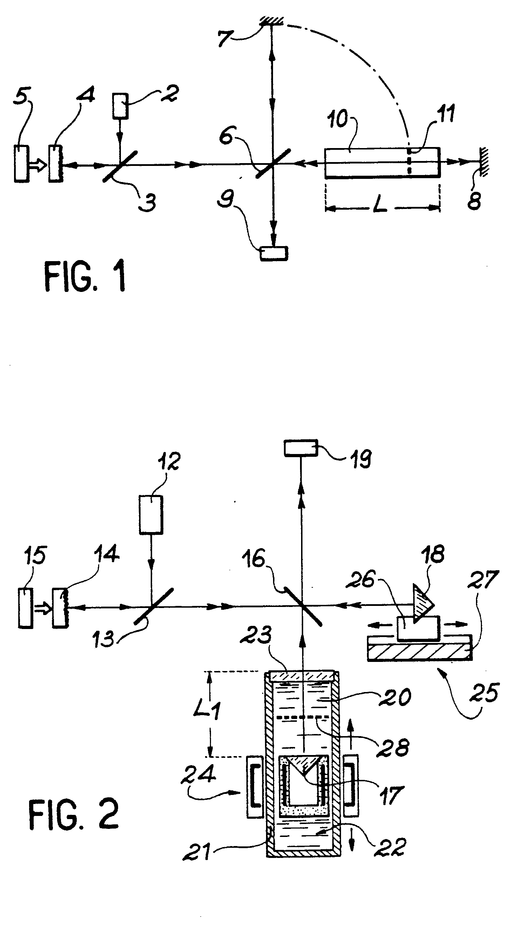

On connaît des interféromètres de vitesse, appelés "interféromètres de Michelson à grand angle" ou encore "à champ élargi", permettant d'effectuer de telles mesures. Un exemple de réalisation de ces interféromètres est schématiquement représenté sur la figure 1 et comprend essentiellement: un laser 2 qui envoie, par l'intermédiaire d'un miroir semi-transparent 3 par exemple, un faisceau lumineux sur une surface diffusante à étudier 4, qui peut par exemple être mise en mouvement à l'aide d'un projectile 5; un moyen séparateur de faisceau 6 qui capte la lumière réfléchie par la surface éclairée par le faisceau lumineux, en réfléchit une partie et en transmet une autre partie; un premier miroir 7 qui réfléchit en direction du moyen séparateur 6 la lumière réfléchie par celui-ci qui en transmet alors une partie; un second miroir 8 qui réfléchit en direction du moyen séparateur 6 la lumière transmise par celui-ci qui en réfléchit alors une partie; des moyens 9 de détection des interférences résultant de la superposition de la lumière issue du moyen séparateur 6 après réflexion sur le premier miroir 7 et de la lumière issue du moyen séparateur 6 après réflexion sur le second miroir 8; et un bloc de verre 10 à faces parallèles, de longueur ou plus exactement d'épaisseur L (distance entre les deux faces parallèles) et d'indice optique n, interposée entre le moyen séparateur 6 et le second miroir 8, la distance du premier miroir 7 au moyen séparateur 6 étant égale à la distance entre ce dernier et la position apparente 11, vue des moyens 9 de détection, du second miroir 8.

Un tel interféromètre présente les inconvénients suivants: pour avoir une grande sensibilité, il est nécessaire de réaliser un bloc de verre 10 de grande longueur (par exemple d'environ 1,50 m pour détecter des variations de vitesse ΔV inférieures à 30 m/s), ce qui est difficile et coûteux; en outre, la sensibilité de l'interféromètre est fixée une fois pour toutes par le choix d'un bloc de verre, compte tenu de la relation suivante:

$$\Delta V = \frac{1}{4} \lambda_0 \, c \, L^{-1} \, (n - 1/n)^{-1} \qquad (1)$$

dans laquelle $\lambda_0$ et c désignent respectivement la longueur d'onde d'émission du laser 2 et la vitesse de la lumière dans le vide.

La présente invention a pour but de remédier aux inconvénients précédents.

On connaît, par le document DE—A—2 818 166, un interféromètre de Michelson à champ élargi, utilisant un milieu à faces parallèles, et par le document DE—A—2 540 984, un interféromètre de Michelson dans l'un des bras duquel le chemin optique de la lumière (n.l.) est rendu variable sans mouvement mécanique de composants, l'un des miroirs de l'interféromètre étant placé dans un gaz dont la pression est variable de manière à modifier son indice de réfraction n.

L'invention a pour objet un interféromètre de vitesse, pour déterminer l'évolution temporelle de la vitesse d'une surface optiquement réflectrice ou rétrodiffusante, cet interféromètre comprenant:

une source lumineuse monochromatique et temporellement cohérente, agencée de manière à envoyer un faisceau lumineux sur la surface à étudier,

un moyen séparateur de faisceau lumineux agencé de manière à recevoir la lumière alors renvoyée par la surface, à en transmettre une partie et à en réfléchir une autre partie,

un premier moyen de réflexion de lumière, prévu pour recevoir la partie réfléchie par le moyen séparateur et la réfléchir en direction de ce dernier, pour qu'il en transmette une partie,

un second moyen de réflexion de lumière, prévu pour recevoir la partie transmise par le moyen séparateur et la réfléchir en direction de ce dernier, pour qu'il en réfléchisse une partie, de façon à faire interférer la partie transmise de la lumière réfléchie par le premier moyen de réflexion et la partie réfléchie de la lumière réfléchie par le second moyen de réflexion,

des moyens de détection des interférences en résultant, et

un milieu à faces parallèles qui est disposé sur le trajet de la lumière se propageant entre le moyen séparateur et l'un des moyens de réflexion, et prévu pour retarder cette lumière par rapport à la lumière se propageant entre le moyen séparateur et l'autre moyen de réflexion, ce dernier étant mis en coïncidence avec l'image du moyen de réflexion associé audit milieu, donnée par ce milieu et le moyen séparateur,

interféromètre caractérisé en ce que le milieu à faces parallèles est réalisé à l'aide d'un fluide dans lequel ledit moyen de réflexion associé au milieu est immergé et déplaçable en translation parallèlement au trajet de la lumière tombant sur lui en provenance du moyen séparateur et en ce que ledit autre moyen de réflexion est déplaçable en translation parallèlement au trajet de la lumière tombant sur lui en provenance du moyen séparateur.

Par "fluide", on entend un liquide ou bien un gaz autre que l'air et de préférence sous pression.

Etant donné la nature du milieu à faces parallèles qu'il utilisé, l'interféromètre objet de l'invention est bien plus simple et moins coûteux à réaliser que l'interféromètre connu, décrit plus haut. En outre, l'interféromètre selon l'invention est à sensibilité continûment variable puisqui cette sensibilité est, d'après la relation (1), fonction de l'épaisseur de fluide interposée entre le moyen de réflexion qui lui est associé et le moyen séparateur. Cette épaisseur est réglable puisque ledit moyen de réflexion, plongé dans le fluide, est déplaçable. La mobilité de l'autre moyen de réflexion permet de faire coïncider ce dernier avec l'image du moyen de réflexion associé au fluide, donnée par ce fluide et le moyen séparateur.

L'interféromètre objet de l'invention permet d'enregistrer des variations de vitesse comprises entre quelques mètres par seconde et la vitesse de la lumière, mais la dynamique de mesure reste liée aux moyens de détection et à la géométrie dudit interféromètre choisie par l'expérimentateur. Cet interféromètre est utilisable dans les domaines suivants:

étude de mouvements oscillatoires ou transitoires rapides (piston, valves, par exemple),

étude de la déformation d'éléments de structures sous charge dynamique,

études en balistique (mouvement d'un projectile, de son lanceur ou de la cible associée),

étude des ondes de contraintes mécaniques ou thermiques en régime élastique ou plastique avec ou sans rupture sous l'effet de compression, détente ou tension,

étude du décollement de couches épaisses ou minces dans les matériaux composites, et dans les circuits et composants électroniques,

étude des ondes de choc engendrées par des explosifs ou par projection de plaques,

étude des thermochocs (interaction de photons ou de particules avec la matière), et éventuellement,

en astrophysique.

Selon un mode de réalisation préféré de l'interféromètre objet de l'invention, chacun des premier et second moyens de réflexion comprend un catadioptre, c'est-à-dire un dispositif apte à réfléchir un faisceau lumineux dans la direction d'incidence de celui-ci, quelle que soit cette direction. L'interféromètre selon l'invention peut alors comprendre en outre un premier réflecteur de lumière et un second réflecteur de lumière, chacun d'eux étant disposé, relativement au moyen séparateur et au catadioptre correspondant, de façon que la lumière issue du moyen séparateur et tombant sur le catadioptre correspondant soit réfléchie par celui-ci en direction du réflecteur correspondant puis réfléchie par ce dernier de telle manière qu'elle retourne vers le moyen séparateur suivant le trajet suivi par elle lorsqu'elle va de ce moyen séparateur vers ledit réflecteur correspondant.

De préférence, l'interféromètre objet de l'invention est réalisé de façon que le milieu fluide à faces parallèles soit traversé par des rayons lumineux verticaux.

De préférence également, la source lumineuse comprend un laser dont la puissance lumineuse est telle que le flux de la lumière traversant le milieu fluide à faces parallèles soit au plus égal à 50 mW/cm$^2$.

Enfin, selon une réalisation avantageuse, les moyens de detéction comprennent un enregistreur cinématographique ou trois photodétecteurs, l'un contrôlant l'intensité lumineuse renvoyée par la surface étudiée, les deux autres enregistrant respectivement les intensités lumineuses en deux points, en quadrature de phase, du champ d'interférences.

L'invention sera mieux comprise à la lecture de la description qui suit, d'exemples de réalisation donnés à titre indicatif et nullement limitatif, en référence aux dessins annexés sur lesquels:

la figure 1 est une vue schématique d'un interféromètre de vitesse connu dans l'état de la technique et a déjà été décrite,

la figure 2 est une vue schématique d'un mode de réalisation particulier de l'interféromètre de vitesse objet de l'invention, comportant un milieu à faces parallèles réalisé à l'aide d'une colonne de liquide, et un moyen de réflexion déplaçable dans ce liquide,

les figures 3 et 4 sont des vues schématiques de moyens de déplacement de ce moyen de réflexion,

la figure 5 est une vue schématique d'un autre mode de réalisation particulier de l'interféromètre objet de l'invention, et

la figure 6 est un agrandissement du champ de franges d'interférences que l'on peut observer grâce à l'interféromètre de la figure 5.

Sur la figure 2, on a donc représenté schématiquement un mode de réalisation particulier de l'interféromètre objet de l'invention. Il comprend:

une source lumineuse monochromatique et temporellement cohérente constituée au moyen d'un laser 12 prévu pour envoyer, par l'intermédiaire d'une lame semi-transparente 13 par exemple, un faisceau lumineux sur une surface rugueuse 14 qui est apte à le rétrodiffuser et qui est susceptible d'être mise en mouvement ou déformée à l'aide d'un projectile 15 par exemple,

un moyen 16 séparateur de faisceau lumineux prévu pour recevoir la lumière rétrodiffusée par la surface et pour en transmettre une partie et en réfléchir une autre partie,

un premier moyen 17 de réflexion de lumière, prévu pour recevoir la partie réfléchie par le moyen séparateur 16 et la réfléchir en direction de ce dernier qui en transmet alors une partie,

un second moyen 18 de réflexion de lumière, prévu pour recevoir la partie transmise par le moyen séparateur 16 et la réfléchir en direction de ce dernier qui en réfléchit alors une partie, de façon à faire interférer la partie transmise de la lumière réfléchie par le premier moyen 17 de réflexion et la partie réfléchie de la lumière réfléchie par le second moyen 18 de réflexion,

des moyens 19 de détection des interférences en résultant, et

un milieu à faces parallèles 20 qui est disposé sur le trajet de la lumière se propageant entre le moyen séparateur 16 et le premier moyen 17 de réflexion, et prévue pour retarder cette lumière, par rapport à la lumière se propageant entre le moyen séparateur 16 et le second moyen 18 de réflexion.

Chacun des premier et second moyens de réflexion 17 et 18 consiste par exemple en un miroir plan orienté de manière à recevoir, sous incidence normale, la lumière qui lui parvient du moyen séparateur 16, mais est de préférence réalisé à l'aide d'un catadioptre tel qu'un coin de cube transparent. (Par "coin de cube", on entend un tétraèdre dont trois faces sont des triangles rectangles isocèles, ce coin de cube étant orienté de manière que la lumière qui lui parvient du moyen séparateur 16 tombe sur sa quatrième face).

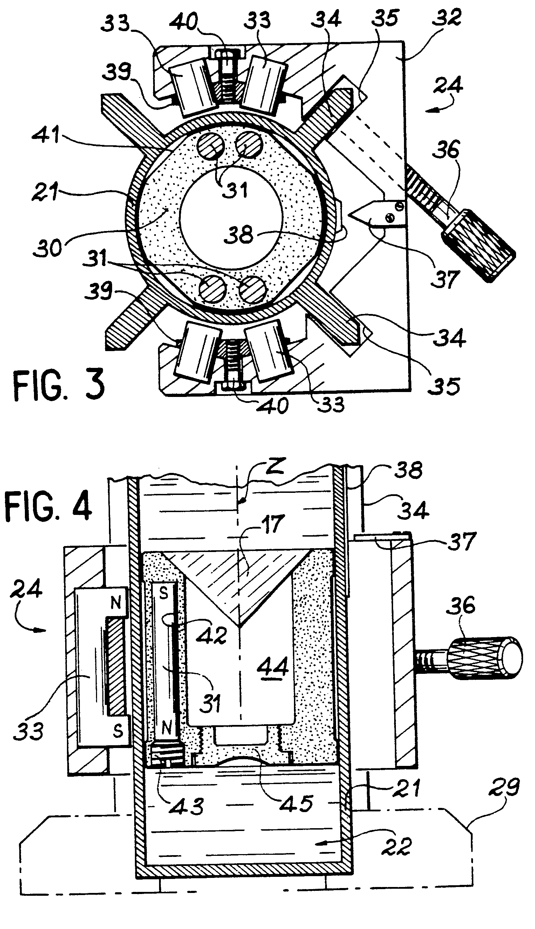

Le premier moyen 17 de réflexion est placé dans une cuve 21 remplie d'un liquide 22, et déplaçable en translation parallèlement au trajet de la lumière tombant sur lui en provenance du moyen séparateur 16. Ledit milieu à faces parallèles 20 est ainsi formé par l'épaisseur de liquide 22, comprise entre le premier moyen 17 de réflexion et la surface de liquide en regard du moyen séparateur 16. Cette surface de liquide est rendue plane en obturant la cuve 21 à l'aide d'une lame transparente 23 en contact avec le liquide, de même indice optique que celui-ci et perpendiculaire au trajet de la lumière tombant sur le premier moyen 17 de réflexion. La mobilité du premier moyen 17 de réflexion au sein du liquide est assurée par des moyens 24 de déplacement par exemple de type magnétique, qui seront décrits en référence aux figures 3 et 4.

Le second moyen 18 de réflexion est également déplaçable en translation parallèlement au trajet de la lumière tombant sur lui en provenance du moyen séparateur 16. La translation du second moyen 18 de réflexion est réalisée à l'aide d'autres moyens 25 de déplacement comprenant un support 26 sur lequel le second moyen 18 de réflexion est fixé et qui est déplaçable dans une glissière 27 par exemple à queue d'aronde.

Le premier moyen 17 de réflexion est réglé de manière à obtenir la sensibilité voulue pour l'interféromètre de l'invention, compte tenu de la relation (1) dans laquelle la variable L prend ici la valeur $L_1$ (épaisseur de liquide comprise entre le premier moyen 17 de réflexion et la surface de liquide en regard du moyen séparateur 16, plus épaisseur de la lame 23), et le second moyen 18 de réflexion est alors déplacé de façon que la distance de celui-ci au moyen séparateur 16 soit égale à la distance de ce dernier à la position apparente 28, vue des moyens 19 de détection, du premier moyen 17 de réflexion.

Un changement de sensibilité entraîne un re-réglage de la position des moyens de réflexion 17 et 18 et également de l'orientation de ceux-ci lorsque ce sont des miroirs. L'intérêt de l'emploi de catadioptres au lieu de miroirs réside dans le fait que ces catadioptres sont insensibles à des rotations (d'amplitudes suffisamment faibles bien entendu), ce qui évite ledit re-réglage d'orientation.

Le liquide utilisé est par exemple le xylène dont l'indice optique est égal à 1,48 et le laser est par exemple un laser à argon ionisé dont la lumière émise est filtrée pour obtenir un rayonnement monofréquence de longueur d'onde 0,488 µm. De préférence, la puissance du laser est choisie de façon que le flux lumineux traversant le liquide soit au plus égal à 50 mW/cm² pour obtenir une configuration transversale stable du champ de franges d'interférences. De plus, pour réduire encore les gradients thermiques transversaux dans le liquide, c'est-à-dire perpendiculaires à la propagation de la lumière dans ce liquide, la cuve 21 est disposée verticalement et les différents constituants de l'interféromètre de l'invention sont convenablement disposés pour que le premier moyen 17 de réflexion reçoive, sous une incidence verticale, la lumière issue du moyen séparateur 16.

Sur les figures 3 et 4, on a représenté schématiquement, respectivement en coupes transversale et longitudinale, les moyens 24 de déplacement du premier moyen 17 de réflexion. La cuve 21 se présente sous la forme d'un tube réalisé en un matériau non magnétique tel que l'aluminium et fermé à sa partie inférieure qui est montée sur un socle 29. Lesdits moyens 24 de déplacement sont du type magnétique et comprennent essentiellement un support 30 qui est mobile dans le tube 21 et muni d'aimants permanents 31 et sur lequel est fixé le premier moyen 17 de réflexion, et un chariot 32 qui est mobile à l'extérieur du tube 21, situé en regard du support 30 et également muni d'aimants permanents 33 situés en regard des aimants 31, de façon que le déplacement du chariot 32 entraîne celui du support 30.

Dans une réalisation particulière, le tube 21 est muni d'ailettes longitudinales externes 34; le chariot 32 est pourvu de rainures 35 lui permettant de coulisser sur les ailettes 34, d'une vis de blocage 36 pour l'immobiliser à un niveau déterminé du tube 21, et d'un index 37 pour repérer ledit niveau, une réglette graduée 38 pouvant alors être fixée longitudinalement sur le tube 21 de façon que l'index se déplace le long de cette réglette; le chariot présente des extrémités qui sont diamétralement opposées par rapport au tube 21; les aimants 33 sont des aimants-cavaliers de même longueur et répartis en deux groupes chaque groupe comprenant deux aimants-cavaliers de forme allongée qui sont montés côte à côte et parallèlement à l'axe Z du tube, sur un porte-aimants 39 lui-même fixé sur l'une des extrémités du chariot 32 à l'aide d'une vis 40, les extrémités des aimants-cavaliers étant recourbées et tournées vers le tube 21; le support 30 est prévu pour coulisser dans le tube 21 et présente des méplats externes 41 permettant le passage du liquide 22 entre le support 30 et le tube 21, le support 30 étant réalisé en un matériau non magnétique et apte à réduire les frottements contre le tube, comme le polytétrafluoréthylène par exemple; et les aimants 31 du support 30 sont des aimants-bâtons de même longueur et parallèles à l'axe Z du tube, chacun d'eux étant maintenu dans ce support et magnétiquement couplé à l'un des aimants-cavaliers (les pôles nord et sud de l'un étant respectivement en regard des pôles sud et nord de l'autre).

Les aimants 31 sont par exemple disposés dans des logements 42 pratiqués dans le support 30. On peut réaliser des logements 42 parallèles à l'axe Z, débouchant à la base du support 30, et les fermer inférieurement à l'aide de bouchons 43 réalisés en le même matériau que le support 30, et permettant le maintien des aimants 31 dans ces logements 42.

Lorsque la cuve 21 est verticale, le support 30 peut comporter une cavité 44 débouchant à la base du support 30 et fermée inférieurement par un bouchon d'étanchéité 45 permettant une introduction éventuelle de liquide 22 dans la cavité 44, de façon à rendre le support 30 de flottabilité nulle.

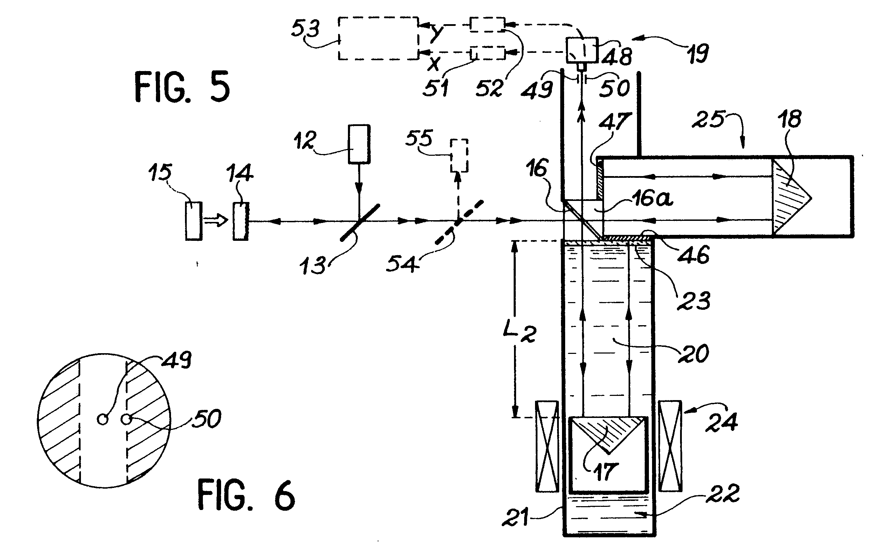

Sur la figure 5, on a représenté schématiquement un autre mode de réalisation particulier de l'interféromètre objet de l'invention. La seule différence entre cet autre mode de réalisation et celui qui a été décrit en référence à la figure 2, réside dans le fait qu'il comprend en outre un premier réflecteur de lumière 46 et un second réflecteur de lumière 47 qui consistent par exemple en des miroirs plans. Le premier miroir 46 est disposé au sommet de la cuve 21, parallèlement au premier catadiopte 17 et de façon que la lumière issue du moyen séparateur 16 et se réfléchissant sur le premier catadioptre 17, parvienne au premier miroir 46, se réfléchisse sur ce dernier et retourne au moyen séparateur 16 en suivant le même trajet en sens inverse.

Le second miroir 47 est disposé parallèlement au second catadioptre 18 et de façon que la lumière issue du moyen séparateur 16 et se réfléchissant sur le second catadioptre 18, parvienne au second miroir 47, se réfléchisse sur ce dernier et retourne au moyen séparateur 16 en suivant le même trajet en sens inverse.

Le moyen séparateur 16 est par exemple un cube séparateur 16a. L'interféromètre de l'invention peut alors être réalisé de façon que ses bras 16—17 et 16—18 soient perpendiculaires, le cube 16a étant en contact, par une face appropriée, avec une moitié de la lame 23, le premier miroir 46 étant en contact avec l'autre moitié de la lame 23 et le premier catadioptre étant de taille suffisante pour être en regard à la fois du cube 16a et du premier miroir 46. Le second miroir 47 est alors contigu et parallèle à une autre face du cube 16a, qui correspond au second catadioptre 18, celui-ci ayant une taille suffisante pour être en regard à la fois du cube 16a et du second miroir 47.

On peut par exemple réaliser le premier miroir 46 par dépôt d'une couche réflectrice sur ladite autre moitié de la lame 23.

L'interféromètre représenté sur la figure 5 permet de couvrir une grande plage de sensibilité en déplaçant les catadioptres 17 et 18 sans toucher aux miroirs 46 et 47, le trajet de la lumière dans le liquide étant égal à $2L_2$, où $L_2$ représente l'épaisseur 20 de liquide.

Avec un liquide tel que le xylène d'indice optique 1,48, une longueur utile $L_2$ de 76 cm et la raie de 0,488 µm d'un laser à argon ionisé, on peut ainsi mesurer des variations de vitesse supérieures à 30 m/s.

Bien entendu, comme dans le cas de l'interféromètre décrit en référence à la figure 2, le second catadioptre 18 est toujours réglé de façon que la distance entre lui et le moyen séparateur 16 soit égale à la distance entre ce dernier et la position apparente, vue des moyens 19 de détection du premier catadioptre 17.

Les moyens 19 de détection (figures 2 et 5) peuvent comprendre un enregistreur cinématographique 48 pour filmer l'évolution temporelle du champ de franges d'interférences, formé dans l'interféromètre, ce qui permet de déterminer, en fonction du temps t, la vitesse V(t) de la surface 14 avec ses changements de signe, sans introduire d'erreur consécutive aux variations de l'intensité lumineuse rétrodiffusée par la surface 14.

Ce résultat peut également être obtenu à l'aide de deux détecteurs photoélectriques, en enregistrant avec ceux-ci deux signaux déphasés, par exemple en quadrature de phase, et en mesurant éventuellement l'intensité lumineuse rétrodiffusée par la surface 14. Pour ce faire, les moyens 19 de détection comprennent deux fibres optiques 49 et 50 (en silice et de 1 mm de diamètre par exemple) qui sont disposées de façon que deux extrémités respectives de ces fibres observant les interférences lumineuses formées dans l'interféromètre, en deux points en quadrature de phase. On a traduit cela sur la figure 6 sur laquelle on voit un agrandissement du champ de franges d'interférences. L'extrémité de la fibre 49 est centrée sur une frange brillante tandis que l'extrémité de la fibre 50 est à la limite d'une frange brillante et d'une frange sombre. Ces fibres sont en outre respectivement reliées par leurs autres extrémités à deux photodiodes 51 et 52, elles-mêmes respectivement reliées aux entrées X et Y d'un oscilloscope 53 travaillant en mode de balayage XY. On observe sur l'écran de l'oscilloscope, les signaux $I_X$ et $I_Y$ correspondant à la lumière captée par les fibres et l'on règle l'angle entre les miroirs 46 et 47 jusqu'à ce que ces signaux soient en quadrature de phase (une ellipse apparaissant dans ce cas sur l'écran de l'oscilloscope). On passe alors du mode de balayage XY au mode X(t) et Y(t).

On contrôle en outre l'intensité lumineuse $I_0$ rétrodiffusée par la surface 14 lorsque cette intensité fluctue (ce qui est en général le cas), à l'aide d'un miroir semi-transparent 54 qui en prélève une partie et d'un photodétecteur 55 qui capte cette partie.

Bien entendu, au lieu d'interposer le milieu liquide à faces parallèles entre le premier moyen de réflexion et le moyen séparateur, comme c'est le cas dans les figures 2 et 5, on pourrait l'interposer entre le second moyen de réflexion et le moyen séparateur, en disposant donc le second moyen de réflexion dans la cuve et en permutant les moyens de déplacement 24 et 25 (et en réglant le premier moyen de réflexion de façon que sa distance au moyen séparateur soit égale à la distance entre ce dernier et la position apparente, vue des moyens de détection, du second moyen de réflexion).

## Revendications

1. Interféromètre de vitesse, pour déterminer l'évolution temporelle de la vitesse d'une surface (14) optiquement réflectrice ou rétrodiffusante, cet interféromètre comprenant:

une source lumineuse (12) monochromatique et temporellement cohérente, agencée de manière à envoyer un faisceau lumineux sur la surface à étudier,

un moyen séparateur de faisceau lumineux (16) agencé de manière à recevoir la lumière alors renvoyée par la surface, à en transmettre une partie et à en réfléchir une autre partie,

un premier moyen de réflexion de lumière (17), prévu pour recevoir la partie réfléchie par le moyen séparateur et la réfléchir en direction de ce dernier, pour qu'il en transmette une partie,

un second moyen de réflexion de lumière (18), prévu pour recevoir la partie transmise par le moyen séparateur (16) et la réfléchir en direction de ce dernier, pour qu'il en réfléchisse une partie, de façon à faire interférer la partie transmise de la lumière réfléchie par le premier moyen de réflexion (17) et la partie réfléchie de la lumière réfléchie par le second moyen de réflexion (18),

des moyens (19) de détection des interférences en résultant, et

un milieu à faces parallèles (20) qui est disposé sur le trajet de la lumière se propageant entre le moyen séparateur (16) et l'un des moyens de réflexion (17 ou 18), et prévu pour retarder cette lumière par rapport à la lumière se propageant entre le moyen séparateur et l'autre moyen de réflexion (18 ou 17), ce dernier étant mis en coïncidence avec l'image du moyen de réflexion associé audit milieu, donnée par ce milieu et le moyen séparateur, interféromètre caractérisé en ce que le milieu à faces parallèles (20) est réalisé à l'aide d'un fluide dans lequel ledit moyen de réflexion (17 ou 18) associé au milieu est immergé et déplaçable en translation parallèlement au trajet de la lumière tombant sur lui en provenance du moyen séparateur (16) et en ce que ledit autre moyen de réflexion (18 ou 17) est déplaçable en translation parallèlement au trajet de la lumière tombant sur lui en provenance du moyen séparateur.

2. Interféromètre selon la revendication 1, caractérisé en ce que chacun des premier et second moyens de réflexion (17, 18) comprend un catadioptre.

3. Interféromètre selon la revendication 2, caractérisé en ce qu'il comprend en outre un premier réflecteur de lumière (46) et un second réflecteur de lumière (47), chacun d'eux étant disposé, relativement au moyen séparateur (16) et au catadioptre correspondant (17, 18), de façon que la lumière issue du moyen séparateur (16) et tombant sur le catadioptre correspondant (17, 18) soit réfléchie par celui-ci en direction du réflecteur correspondant (46, 47) puis réfléchie par ce dernier de telle manière qu'elle retourne vers le moyen séparateur (16) suivant la trajet suivi par elle lorsqu'elle va de ce moyen séparateur vers ledit réflecteur correspondant.

4. Interféromètre selon l'une quelconque des revendications 1 à 3, caractérisé en ce que le milieu fluide (20) à faces parallèles est traversé par des rayons lumineux verticaux.

5. Interféromètre selon l'une quelconque des revendications 1 à 4, caractérisé en ce que la source lumineuse (12) comprend un laser dont la puissance lumineuse est telle que le flux de la lumière traversant le milieu fluide à faces parallèles soit au plus égal à 50 mW/cm².

6. Interféromètre selon l'une quelconque des revendications 1 à 5, caractérisé en ce que les moyens (19) de détection comprennent un enregistreur cinématographique (48).

7. Interféromètre selon l'une quelconque des revendications 1 à 5, caractérisé en ce que les moyens (19) de détection comprennent trois photodétecteurs, l'un (55) contrôlant l'intensité lumineuse renvoyée par la surface étudiée (14), les deux autres (51, 52) enregistrant respectivement les intensités lumineuses en deux points, en quadrature de phase, du champ d'interférences.

## Patentansprüche

1. Geschwindigkeitsinterferometer zur Bestimmung der zeitlichen Entwicklung der Geschwindigkeit einer optisch reflektierenden oder rückstreuenden Oberfläche (14), wobei dieses Interferometer umfaßt:

eine monochromatische und zeitlich kohärente Lichtquelle (12), die derart angeordnet ist, daß sie ein Lichtbündel auf die zu untersuchende Oberfläche schickt,

eine Lichtbündeltrenneinrichtung (16), die derart angeordnet ist, daß sie das dann von dieser Oberfläche zurückgesandte Licht empfängt, davon einen Anteil hindurchläßt und den anderen Anteil reflektiert,

eine erste Lichtreflektionseinrichtung (17), die vorgesehen ist, den von der Trenneinrichtung reflektierten Anteil zu erhalten und diesen in Richtung zu der letzteren zu reflektieren, damit diese einen Teil davon hindurchläßt,

eine zweite Lichtreflektionseinrichtung (18), die vorgesehen ist, den von der Trenneinrichtung (16) hindurchgelassenen Teil zu erhalten und diesen in Richtung zu letzterer zu reflektieren, damit diese einen Teil davon derart reflektiert, daß der hindurchgegangene Anteil des von der ersten Reflektionseinrichtung (17) reflektierten Lichts und der reflektierte Anteil des von der zweiten Reflektionseinrichtung (18) reflektierten Lichts interferieren,

Erfassungsmittel (19) für die sich ergebenden Interferenzen, und

ein Medium mit parallelen Seiten (20), welches in dem Weg des Lichts, welches sich zwischen der Trenneinrichtung (16) und einer der Reflektionseinrichtung (17 oder 18) fortpflanzt, angeordnet und vorgesehen ist, um dieses Licht in bezug auf das Licht zu verzögern, welches sich zwischen der Trenneinrichtung und der anderen Reflektionseinrichtung (18 oder 17) fortpflanzt, wobei letztere mit dem von diesem Medium unter Trenneinrichtung gegebenen Bild der dem genannten Medium zugeordneten Reflektionseinrichtung in Koinzidenz gebracht wird und das Interferometer dadurch gekennzeichnet ist, daß das Medium mit parallelen Seiten (20) mit Hilfe eines Fluids hergestellt ist, in dem die genannte dem Medium zugeordnete Reflektionseinrichtung (17 oder 18) untergetaucht und parallel zu dem Weg des Lichts verschiebbar ist, welches von der Trenneinrichtung (16) herkommt, fällt, und daß die genannte andere Reflektionseinrichtung (18 oder 17) parallel zu dem Weg des Lichts verschiebbar ist, welches von der Trenneinrichtung herkommend auf sie fällt.

2. Interferometer nach Anspruch 1, dadurch gekennzeichnet, daß die erste und die zweite Reflektionseinrichtung (17, 18) jeweils einen Rückstrahler umfaßt.

3. Interferometer nach Anspruch 2, dadurch gekennzeichnet, daß es ferner einen ersten Lichtreflektor (46) und einen zweiten Lichtreflektor (47) umfaßt, von denen jeder in bezug auf die Trenneinrichtung (16) und den entsprechenden Rückstrahler (17, 18) derart angeordnet ist, daß das von der Trenneinrichtung (16) und auf dem entsprechenden Rückstrahler (17, 18) auffallende Licht von diesem in Richtung zu dem entsprechenden Reflektor (46, 47) reflektiert und dann von diesem letzteren derart reflekiert wird, daß es zu der Trenneinrichtung (16) längs des Weges zurückkehrt, dem es folgt, wenn es von dieser Trenneinrichtung zu dem genannten entsprechenden Reflektor geht.

4. Interferometer nach irgendeinem der Ansprüche 1 bis 3, dadurch gekennzeichnet, daß das Fluidmedium (20) mit parallelen Seiten von senkrechten Lichtstrahlen durchlaufen wird.

5. Interferometer nach irgendeinem der Ansprüche 1 bis 4, dadurch gekennzeichnet, daß die Lichtquelle (12) einen Laser umfaßt, dessen Lichtleistung derart ist, daß der das Fluidmedium mit parallelen Seiten durchquerende Lichtfluß höchstens gleich 50 mW/cm$^2$ ist.

6. Interferometer nach irgendeinem der Ansprüche 1 bis 5, dadurch gekennzeichnet, daß die Erfassungsmittel (19) eine kinematographische Aufzeichnungseinrichtung (48) umfassen.

7. Interferometer nach irgendeinem der Ansprüche 1 bis 5, dadurch gekennzeichnet, daß die Erfassungsmittel (19) drei Photodetektoren aufweisen, von denen eine (55) die von der untersuchten Oberfläche (14) zurückgesandte Lichtintensität überwacht und die zwei anderen (51, 52) jeweils die Lichtintensität an zwei Punkten des Interferenzfeldes mit 90° Phasenverschiebung erfassen.

**Claims**

1. Velocity interferometer for determining the time evolution of the velocity of an optically reflecting or back scattering surface (14) and which comprises:

a monochromatic, time-coherent light source (12), arranged so as to transmit a light beam onto the surface to be studied,

a light beam splitting means (16) arranged so as to receive the light thrown back by the surface, whilst transmitting one part thereof and reflecting the other part,

a first light reflection means (17) for receiving the part reflected by the splitting means and for reflecting it in the direction of the latter, so that it transmits part thereof,

a second light deflection means (18) for receiving the part transmitted by the splitting means (16) and for reflecting it in the direction of the latter, in order that it reflects part thereof, so as to bring about interference between the transmitted part of the light reflected by the first reflection means (17) and the reflected part of the light reflected by a second reflection means (18),

means (19) for detecting the interferences resulting therefrom, and

a medium (20) with parallel faces located on the path of the light propagated between the splitting means (16) and one of the reflection means (17 or 18) and which serves to delay said light with respect to the light propagating between the splitting means and the other reflection means (18 or 17), the latter being made to coincide with the image of the reflection means associated with said medium, given by the latter and the splitting means, characterized in that the medium (20) with parallel faces is realised with the aid of a fluid in which said reflection means (17 or 18) associated with the medium is immersed and displaceable in translation parallel to the path of the light falling thereon and coming from the splitting means (16) and in that said other reflection means (18 or 17) is displaceable in translation parallel to the path of the light falling thereon and coming from the splitting means.

2. Interferometer according to claim 1, characterized in that each of the first and second reflection means (17, 18) comprises a catadioptric system.

3. Interferometer according to claim 2, characterized in that it also comprises a first light reflector (46) and a second light reflector (47), each of them being arranged with respect to the splitting means (16) and the corresponding catadioptric means (17, 18), in such a way that the light from the splitting means (16) and falling on the corresponding catadioptric system (17, 18) is reflected by the latter in the direction of the corresponding reflector (46, 47) and is then reflected by the latter in such a way that it returns to the splitting means (16) taking the path followed by it when it passed from said splitting means to the corresponding reflector.

4. Interferometer according to any one of the claims 1 to 3, characterized in that the fluid medium (20) with parallel faces is traversed by vertical light beams.

5. Interferometer according to any one of the claims 1 to 4, characterized in that the lighting source (12) comprises a laser, whose lighting power is such that the flux of the light passing through the fluid medium with parallel faces is at the most equal to 50 mW/cm².

6. Interferometer according to any one of the claims 1 to 5, characterized in that the detection means (19) comprise a cinematographic recorder (48).

7. Interferometer according to any one of the claims 1 to 5, characterized in that the detection means (19) comprise three photodetectors, one (55) controlling the light intensity thrown back thereby the investigated surface (14) and the two others (51, 52) respectively recording the light intensity at two points, in phase quadrature, of the interference field.

FIG. 1

FIG. 2

FIG. 3

FIG. 4

2

FIG. 5

FIG. 6